# EUROPEAN PATENT SPECIFICATION

(11) **EP 1 216 171 B1**
(45) Date of publication and mention of the grant of the patent: **06.08.2003**
(21) Application number: 00964455.0
(22) Date of filing: 29.09.2000
(51) Int. Cl.: B60R 21/34, E05D 11/00, E05D 3/06

(54) **A HINGE ARRANGEMENT**
GELENKANORDNUNG
DISPOSITIF DE CHARNIERE

(30) Priority: 29.09.1999 GB 9922926
(43) Date of publication of application: 26.06.2002
(73) Proprietor: Ford Global Technologies, Inc., Dearborn, Michigan 48126-2490 (US)
(72) Inventor: STAINES, Bradley, Essex SS7 4AD (GB)
(74) Representative: Messulam, Alec Moses
(86) International application number: GB0003753
(87) International publication number: WO01023226

(56) References cited:
- EP-A- 0 630 801
- DE-A- 4 313 786
- DE-A- 19 710 417
- US-A- 1 496 588
- US-A- 3 643 755
- PATENT ABSTRACTS OF JAPAN vol. 008, no. 120 (M-300), 6 June 1984 (1984-06-06) & JP 59 026370 A (NISSAN JIDOSHA KK), 10 February 1984 (1984-02-10)
- PATENT ABSTRACTS OF JAPAN vol. 1999, no. 09, 30 July 1999 (1999-07-30) & JP 11 099906 A (NISSAN MOTOR CO LTD), 13 April 1999 (1999-04-13)

## Description

This invention relates to a hinge arrangement intended particularly, but not exclusively, for pivotally mounting a motor vehicle bonnet on the motor vehicle body.

The invention is not however restricted to this particular application and may have a more general application.

In some countries a motor vehicle bonnet is known as a hood, but hereinafter, the term bonnet will be used.

There are increasing demands for motor vehicle design to take account of pedestrian safety and, so far as possible, to design vehicles so that in an impact between a pedestrian and a vehicle, the pedestrian has a reasonable chance of avoiding serious injury or death.

In the case of a frontal impact between a moving vehicle and a pedestrian, the pedestrian is usually thrown onto the vehicle bonnet. If there was an empty space beneath the bonnet, the deformable nature of the sheet metal itself would afford some protection because the energy of the impact could be absorbed to some extent by deformation of the bonnet. However modern vehicle design also calls for no wasted space in the engine compartment and so there is usually a very limited amount of possible deformation of the bonnet before the impact of the pedestrian on the vehicle is transmitted to (unyielding) engine components.

In order to avoid this problem it is known from, for example, DE 197 12 961 to provide a mechanism which lifts the rear edge of the bonnet in the event of an impact so that the energy of the pedestrian falling into the vehicle can be absorbed by deformation of the bonnet.

It is known from US-A-3,643,755 to provide a hinge mechanism according the preamble of claim 1, for providing a hinged connection between two components, the hinge mechanism comprising a first hinge part fixed to a first component in the form of a bonnet of a motor vehicle, a second hinge part fixed to a second component in the form of part of the body structure of the vehicle and a two part linkage mechanism between the first and second hinge parts.

Under normal conditions, the first and second hinge parts are able to pivot relative to one another about a single pivot axis linking the two parts of the linkage mechanism.

However, one part of the linkage mechanism is connected to one of the first and second hinge parts by a normally fixed but frangible connection.

This releasable connection will be released when sufficient force is applied to it. When this happens it allows the first and second hinge parts to move apart from each other and towards each other by pivoting about more than one pivot axis.

Although this mechanism allows the rear edge of the bonnet to displace it has the disadvantage that the releasable connection is destroyed when it is released.

It is one object of the invention to provide a mechanism which will allow the rear edge of the bonnet to be rapidly lifted in the event of a pedestrian collision.

According to the invention there is provided a hinge mechanism for providing a hinged connection between two components, the hinge mechanism comprising a first hinge leaf to be fixedly attached to a first component, a second hinge leaf to be fixedly attached to a second component and a two part linkage mechanism between the first and second hinge leaves arranged such that, under normal conditions, the first and second leaves are able to pivot relative to one another about a single pivot axis linking the two parts of the linkage mechanism wherein a first part of the linkage mechanism is connected to one of the first and second hinge leaves by a first normally fixed but releasable connection, the first releasable connection being released when sufficient force is applied to it so as to allow the first and second leaves to move apart from each other and towards each other by pivoting about more than one pivot axis characterised in that a second part of the linkage mechanism is connected to the other one of the first and second hinge leaves by a second normally fixed but releasable connection and that the second part of the linkage mechanism moves with the other one of the first and second hinge leaves.

The hinge mechanism can be advantageously used to make a hinged connection between the bonnet of a motor vehicle and the vehicle body by fixing the first and second leaves to the bonnet and the vehicle body respectively, so that in normal use the bonnet opens by pivoting on a normally fixed pivot point between the first leaf and the second leaf.

In the event that the vehicle should collide with a pedestrian, an air bag or similar lifting device located beneath the bonnet will be deployed, thereby providing a sufficient force to break the or each releasable connection in order to push the first and second leaves apart and raise the bonnet away from the vehicle engine.

The bonnet will then have room to deform and absorb some of the energy of the collision.

It will be understood that the first leaf could be fixed to the vehicle body and that the second leaf could be fixed to the bonnet, but for simplicity the first leaf will refer to the leaf fixed to the bonnet and the second leaf will refer to the leaf fixed to the vehicle body.

Since the hinge mechanism allows the subsequent movement of the leaves towards one another (assuming they are not damaged), the hinge mechanism will allow the bonnet to move in a downward direction during a collision, further reducing the risk of injury to a pedestrian, particularly in the event that the pedestrian should fall on the bonnet close to a hinge mechanism.

Said first part of the two parts of the linkage mechanism may be a fourth leaf and the second part of the two parts of the linkage may be a third leaf, the third leaf being pivotally attached at spaced apart respective pivot points to the first leaf and to the fourth leaf and the fourth leaf being pivotally attached at spaced apart respective pivot points to the third leaf and to the second leaf wherein the third leaf (26) is fixed to the first leaf by the second releasable connection and the fourth leaf is fixed to the second leaf by the first releasable connection the first and second releasable connections being such that under normal operating conditions the first releasable connection prevents relative rotation of the fourth arm with respect to the second arm and the second releasable connection prevents relative rotation of the third arm with respect to the first arm so that a single pivot axis is provided between the third and fourth leaves.

The or each releasable connection between two leaves may be formed by the co-operation of a protrusion on the surface of one leaf with a corresponding recess on an opposing surface of the other leaf.

Each protrusion may be in the form of a ridge and each recess is in the form of a groove wherein each ridge and each groove may extend along the respective leaf in which it is formed for at least part of its length in a radial direction with respect to an axis of pivotal movement between the respective leaf and an adjoining leaf.

The grooves and the ridges may be rounded in a direction transverse to the direction in which they extend.

Because the grooves and ridges are rounded in a direction transverse to their length this reduces the force needed to undo and re-do the or each releasable connection.

The grooves and the ridges may extend along a substantial part of the length of the leaves. Because the grooves and ridges extend along a substantial length of the leaves this increases the load that the leaves are able to bear.

The leaves may be able to reversibly deform in order to allow the protrusion and recess to separate.

The maximum separation and relative lateral displacement in one direction of the first and second leaves when they move apart may be limited by a maximum angle through which the third leaf is able to pivot with respect to the fourth leaf.

This is likely to prevent the bonnet from rising too far and obscuring the view through the vehicle windscreen and/or moving too far in a rearward direction and coming into contact with the windscreen when the invention is used to secure a bonnet to a motor vehicle.

The maximum angle through which the third leaf is able to pivot with respect to the fourth leaf may be limited by a tag extending from the third leaf close to the pivot axis between the third and fourth leaves, the tag being adapted to engage with a stop on the fourth leaf when the third leaf reaches a pre-set angular position, so as to prevent any further movement of the third leaf (26).

The releasable connections are re-securable so as to allow the first and second leaves to be subsequently re-fixed in their normal positions after they have been released.

The invention will now be further described, by way of example, with reference to the accompanying drawings, in which:
Figure 1 is a side view of the front part of a motor vehicle with a hinge mechanism according to the invention, where the hinge mechanism is in a normal position;
Figure 2 is a view according to Figure 1 but where the hinge mechanism is in an extended position;
Figure 3 is an expanded view of the hinge mechanism in Figure 1;
Figure 4 is an expanded view of the hinge mechanism in Figure 2; and,
Figure 5 is a side view of hinge mechanism in an extended position according to an alternative embodiment of the invention;
Figure 6 is a side view of the hinge mechanism of Figure 5 in a normal position;
Figure 7 is a cross sectional view through the dashed line A-A in Figure 6, and
Figure 8 is a side view of a hinge mechanism in the extended position according to another embodiment of the invention.

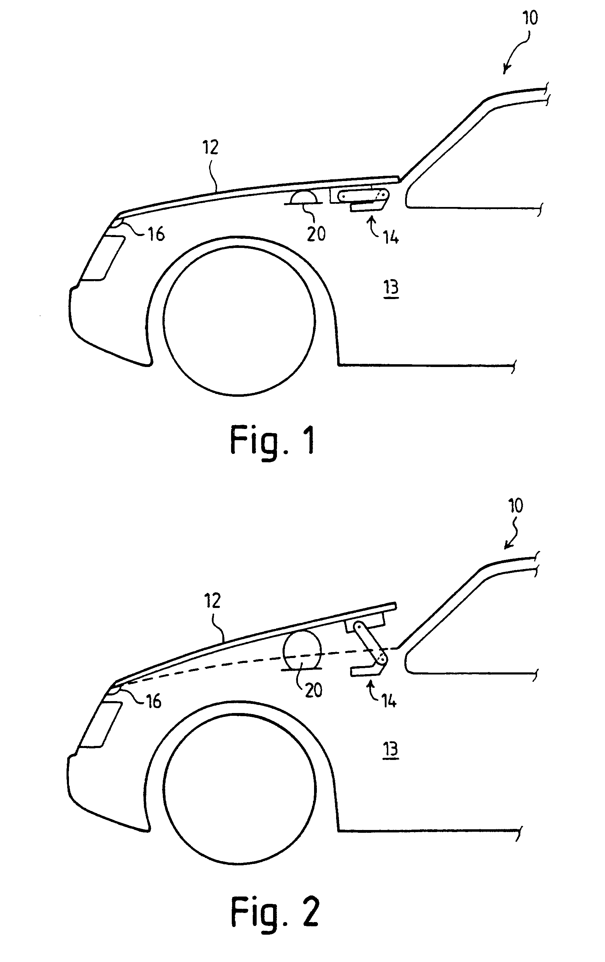

In Figure 1, a motor vehicle 10 is shown with a bonnet 12 in the closed position. The front end of the bonnet is retained by a catch 16 mounted on the vehicle body 13 and the rear end of the bonnet 12 is pivotally attached to the vehicle body 13 at each side by a hinge mechanism 14, shown here in a normal operating position. When the catch 16 is released, the front end of the bonnet 12 can be raised so that the bonnet 12 opens in the normal way by pivoting about a first axis 18 provided by the hinge mechanism 14.

However, if a collision sensor (not shown) senses a collision of the type that might involve a pedestrian, an air bag 20 located beneath the rear end of the bonnet 12 is deployed, thereby producing an upward force on the bonnet 12. The upward force causes the rear end of the bonnet to rise whilst the front end pivots on the latch mechanism 16, so that the bonnet adopts an emergency position that is raised and inclined with respect to the closed position as shown in Figure 2. This emergency bonnet position is likely to reduce the risk of serious injury to a pedestrian falling upon the bonnet since the bonnet can now deform to a greater depth before coming into contact with the engine components beneath, and the inclination of the bonnet will help to deflect a pedestrian away from the vehicle wind screen wipers (not shown).

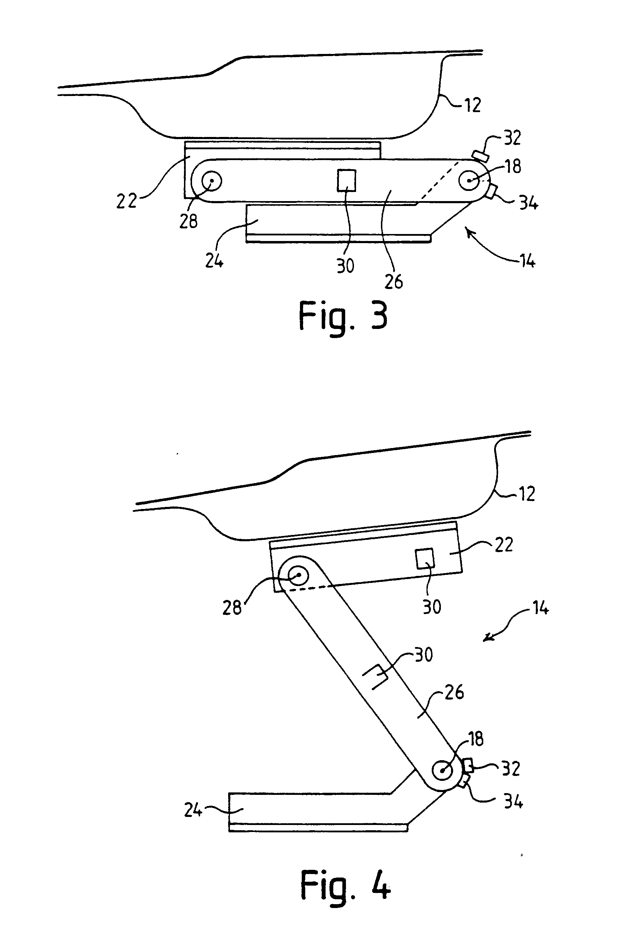

In order to allow the rear end the bonnet to be lifted as shown in Figure 2, the hinge mechanism 14 shown in more detail in Figures 3 and 4 comprises three leaves: an upper leaf 22 fixedly attached to the bonnet 12, a lower leaf 24 fixedly attached to the vehicle body 13, and a middle leaf 26 pivotally attached to the lower and upper leaves 24,22 about a first pivot axis 18 and a second pivot axis 28 respectively. The pivot axes are situated at opposite ends of the middle leaf 26 such that at each end, the middle leaf 26 forms an elbow joint with the upper and lower leaves 22,24 respectively.

Here, the leaves have elongate and substantially planar portions arranged to move parallel to one another along a displaced set of parallel planes, the pivot axes 18, 28 being normal to these planes. However, the leaves could alternatively be arranged such that the pivot axes 18, 28 are parallel the planes of the leaves.

During normal operation of the hinge mechanism, the end of the upper leaf 22 remote from the second pivot axis 28 is releasably attached to the middle leaf 26 by a clip mechanism 30 as shown in Figure 3. The clip mechanism 30 (which here is a pair of punched tabs) is strong enough so that under normal forces, the upper leaf 22 is prevented from pivoting with respect to the middle leaf 26 about the second axis 28, and the hinge mechanism 14 behaves as an ordinary hinge with a single pivot axis, here the first pivot axis 18.

When the air bag 20 begins to deploy, the upward force exerted by the air bag 20 on the bonnet 12 is sufficient to open the clip mechanism 30 and release the upper leaf 22 from the middle leaf 26 so that the upper and middle leaves 22,26 are free to pivot with respect to one another about the second pivot axis 28. The hinge mechanism can then open out into an extended position in the form of an inverted Z as the rear end of the bonnet is lifted by the deployment of the air bag.

To reduce the risk of the bonnet lifting too far and/or moving too far in a rearward lateral direction and into the vehicle windscreen, the maximum possible angle through which the middle leaf 26 can pivot with respect to the lower leaf 24 is limited by a set of tags 32, 34 on the elbow joint between the lower and middle leaves 24,26. One tag 32 extends from the lower leaf 24 in a generally radial direction with respect to the first pivot axis 18 and is bent out of the plane of the lower leaf 24 towards the plane in which the middle leaf 26 resides. The other tag 34 extends from the middle leaf in a similar fashion but is bent towards the plane of the lower leaf 24, so that when the middle leaf 26 is pivoted beyond a maximum angle, the two tags come into contact and thereby prevent any further angular movement of the middle leaf 26 with respect to the lower leaf 24.

Once the air bag 20 has deflated and if the bonnet has not been deformed, then the hinge mechanism 14 can collapse back into the original position that the hinge assumes during normal use. This will allow the bonnet to close again so that the vehicle can be driven after the air bag 20 has been deployed accidentally, for example if the collision sensor senses a minor collision which does not result in a pedestrian falling on the bonnet.

The ability of the hinge mechanism 14 to collapse back into the normal position also helps to reduce the risk of the hinge mechanism injuring a pedestrian falling upon it.

Since in normal use the inclination of the upper leaf 22 and hence the bonnet 12 is determined by the angle of the middle leaf 26, the maximum possible angle through which the middle leaf 26 can pivot will be sufficient to allow the bonnet to be opened during normal use.

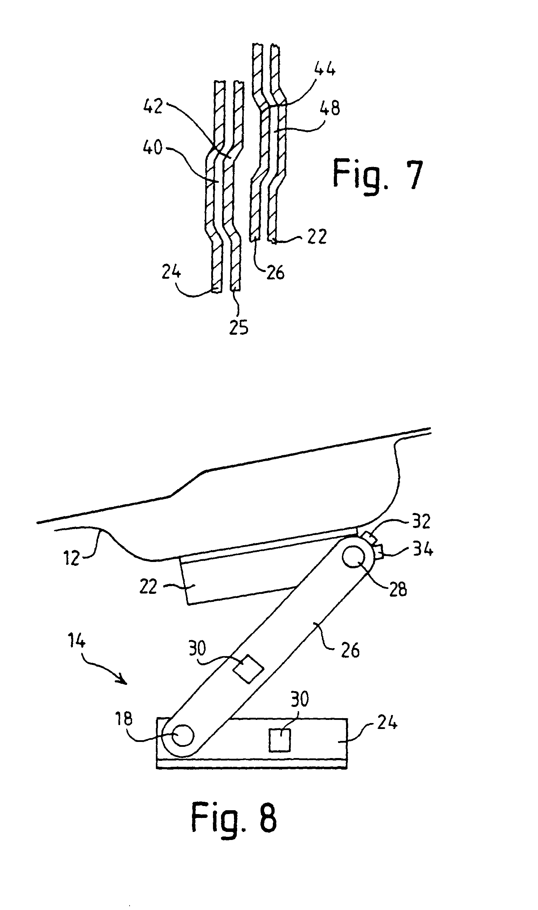

In another embodiment of the hinge mechanism 14 shown in Figure 8, the hinge mechanism is inverted so that the upper leaf becomes the lower leaf and vice versa. As in the previous embodiment, the hinge mechanism has three leaves pivotally connected end to end about a first pivot axis 18 between the lower and middle leaves, and a second pivot axis 28 between the upper and middle leaves. However, in this embodiment the lower leaf 24 (fixedly attached to the vehicle body, not shown) is releasably connected to the middle leaf 26 by tabs 30 so that during normal operation the upper leaf 22 (fixedly attached to the bonnet 12) is free to pivot about the second axis 28. In the extended position, the hinge mechanism assumes the form of a Z and rearward movement of the bonnet is constrained by the pivot axis 18 which is fixed relative the vehicle body.

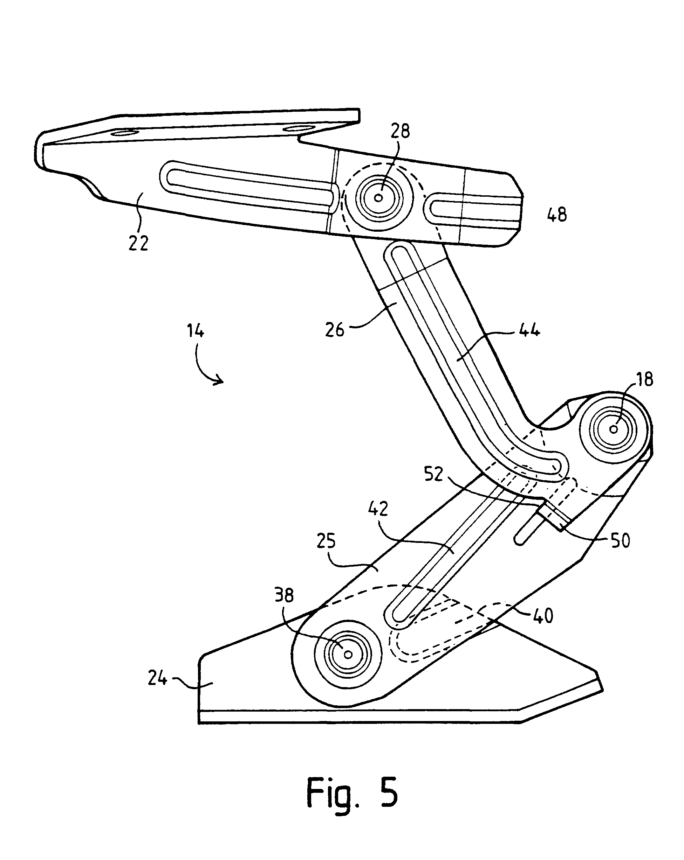

An alternative embodiment of the hinge mechanism 14 is shown in Figure 5 in the extended position, after an air bar (not shown) beneath the bonnet 12 has deployed. Parts corresponding to those in the previous embodiment have been given the same reference numerals.

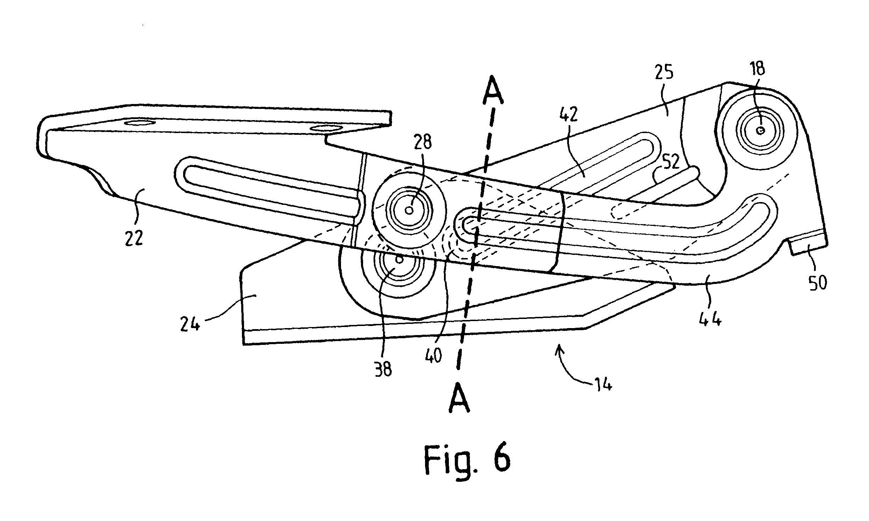

The hinge mechanism 14 in Figures 5 and 6 comprises four leaves: an upper leaf 22, upper-middle leaf 26, lower-middle leaf 25 and a lower leaf 24; the upper leaf 22 and bottom leaf 24 being affixed to the bonnet 12 and vehicle body 13 respectively (for convenience the bonnet 12 and vehicle body 13 are not shown in Figure 5). The upper-middle and lower-middle leaves 25,26 are each respectively pivotally connected to the upper and lower leaves 22,24 at upper and lower pivot axes 28,38, and the upper-middle and lower-middle leaves 25,26 are pivotally connected at a middle pivot axis 18.

The leaves 22,24,25,26 have elongate portions arranged to move parallel to one another along a displaced set of parallel planes, the pivot axes 18,28,38 being normal to these planes.

A tag 50 extending from the lower middle leaf 26 close to the middle pivot axis 18 is adapted to interact with a stop 52 when the upper middle leaf 26 reaches as pre-set angular position, so as to prevent any further movement of the upper middle leaf 26. Limiting the angular movement of the upper middle leaf 26 in this way limits the lateral displacement of the bonnet in the rearward direction, and reduces the risk that the bonnet 12 will collide with the vehicle windscreen when the hinge mechanism 14 is in the extended position, particularly if the latch mechanism 16 retaining the front end of the bonnet has been damaged.

Limiting the angular movement of the upper middle leaf 26 also limits the upward movement of the hinge mechanism when it extends under the force of the air bag 20, so that the view of a vehicle driver is not excessively obstructed by the bonnet 12 when a collision is sensed. Typically, the hinge mechanism 14 will allow the rear end of the bonnet to rise by 10 cm.

When the hinge mechanism 14 is in a normal operating position as shown in Figure 6 (when the bonnet is closed), a rounded groove 40 on the side of the lower leaf 24 is received in a rounded ridge 42 on the side of the lower-middle leaf, the co-operation between the ridge 42 and the groove 40 preventing angular movement of the lower-middle leaf 25 with respect to the lower leaf 24. In a similar fashion, the upper leaf 22 is prevented from moving with respect to the upper middle leaf 26 during normal operation of the hinge 14 by the co-operation between a rounded groove 48 and a corresponding ridge 44 on the oppositely facing sides of the upper leaf 22 and upper-middle leaf 26 respectively.

The leaves 22,24,25,26 are sufficiently stiff such that under normal forces, due to the co-operation between the grooves 40,48 and the ridges 42,44, substantial angular movement between the leaves can only occur at the middle axis 18; the upper and upper middle leaves 22,26 behave as a single leaf, and similarly the lower and lower middle leaves 24,25 also act together as a single leaf. Hence when the hinge mechanism 14 is in the normal operating position, the bonnet 12 opens and closes by pivoting about the middle axis 18. Since the maximum angular movement of the upper middle leaf 26 is limited by the tag 52 when it reaches the stop 52, the maximum inclination of the bonnet 12 when it opens is also limited.

When the air bag 20 below the bonnet expands, the upward force exerted on the hinge mechanism 14 is sufficient to release the ridges 42 and 44 from the respective grooves 40,44 and the hinge is then free to assume the extended position shown in Figure 5.

As the air bag 20 deflates, the rear end of the bonnet 12 will drop under its own weight, since the rear end of the bonnet is only supported by the air bag 20. Therefore, if the air bag 20 deploys but a pedestrian does not collide with the bonnet 12, or if the air bag 20 is deployed accidentally, the vehicle driver can push the bonnet 12 down back into the normal position, and the bonnet 12 will remain secure so that the vehicle driver can continue his journey.

## Claims

1. A hinge mechanism for providing a hinged connection between two components, the hinge mechanism (14) comprising a first hinge leaf (22) to be fixedly attached to a first component (12), a second hinge leaf (24) to be fixedly attached to a second component (13) and a two part linkage mechanism (25, 26) between the first and second hinge leaves (22,24) arranged such that, under normal conditions, the first and second leaves (22,24) are able to pivot relative to one another about a single pivot axis (18) linking the two parts of the linkage mechanism (25, 26) wherein a first part of the linkage mechanism (25, 26) is connected to one of the first and second hinge leaves (22, 24) by a first normally fixed but releasable connection (40, 42), the first releasable connection (40, 42) being released when sufficient force is applied to it so as to allow the first and second leaves (22,24) to move apart from each other and towards each other by pivoting about more than one pivot axis (18,28, 38) **characterised in that** a second part of the linkage mechanism (25, 26) is connected to the other one of the first and second hinge leaves (22) by a second normally fixed but releasable connection (44, 48) and that the second part (26) of the linkage mechanism (25, 26) moves with the other one of the first and second hinge leaves (22, 24).

2. A hinge mechanism as claimed in claim 1 wherein said first part of the two parts of the linkage mechanism is a fourth leaf (25) and the second part of the two parts of the linkage is a third leaf (26), the third leaf (26) being pivotally attached at spaced apart respective pivot points (18,28) to the first leaf (22) and to the fourth leaf (25) and the fourth leaf (25) being pivotally attached at spaced apart respective pivot points (18,38) to the third leaf (26) and to the second leaf (24) wherein the third leaf (26) is fixed to the first leaf (22) by the second releasable connection (44,48) and the fourth leaf (25) is fixed to the second leaf (24) by the first releasable connection (40,42) the first and second releasable connections (40,42;44,48) being such that under normal operating conditions the first releasable connection (40,42) prevents relative rotation of the fourth arm (25) with respect to the second arm (24) and the second releasable connection (44,48) prevents relative rotation of the third arm (26) with respect to the first arm (22) so that a single pivot axis (18) is provided between the third and fourth leaves (26,25).

3. A hinge mechanism as claimed in claim 1 or in claim 2 wherein the or each releasable connection between two leaves is formed by the co-operation of a protrusion (42,44) on the surface of one leaf with a corresponding recess (40,48) on an opposing surface of the other leaf.

4. A hinge mechanism as claimed in claim 3 wherein each protrusion is in the form of a ridge (42,44) and each recess is in the form of a groove (40,48) wherein each ridge (42,44) and each groove (40,48) extends along the respective leaf in which it is formed for at least part of its length in a radial direction with respect to an axis of pivotal movement between the respective leaf and an adjoining leaf.

5. A hinge mechanism as claimed in claim 4 wherein the grooves (40,48) and the ridges (42,44) are rounded in a direction transverse to the direction in which they extend.

6. A hinge mechanism as claimed in claims 4 or 5 wherein the grooves (40,48) and the ridges (42,44) extend along a substantial part of the length of the leaves.

7. A hinge mechanism as claimed in any of claims 3 to 6 wherein the leaves (22,24,25,26) are able to reversibly deform in order to allow the protrusion (42,44) and recess (40,48) to separate.

8. A hinge mechanism as claimed in any of claims 2 to 7 wherein the maximum separation and relative lateral displacement in one direction of the first and second leaves (22,24) when they move apart is limited by a maximum angle through which the third leaf (26) is able to pivot with respect to the fourth leaf (25).

9. A hinge mechanism as claimed in claim 8 wherein the maximum angle through which the third leaf (26) is able to pivot with respect to the fourth leaf (25) is limited by a tag (50) extending from the third leaf (26) close to the pivot axis (18) between the third and fourth leaves (26,25), the tag (50) being adapted to engage with a stop on (52) the fourth leaf (25) when the third leaf (26) reaches a pre-set angular position, so as to prevent any further movement of the third leaf (26).

10. A hinge mechanism as claimed in any preceding claim wherein the releasable connections are re-securable so as to allow the first and second leaves (22, 24) to be subsequently re-fixed in their normal positions after they have been released.

## Patentansprüche

1. Scharniermechanismus zur Herstellung einer Scharnierverbindung zwischen zwei Komponenten, welcher Scharniermechanismus (14) ein erstes Scharnierblatt (22) zur festen Anbringung an einer ersten Komponente (12) aufweist, ein zweites Scharnierblatt (24) zur festen Anbringung an einer zweiten Komponente (13) und einen zweiteiligen Befestigungsmechanismus (22, 24) zwischen dem ersten und dem zweiten Scharnierblatt (22, 24), derart angeordnet, daß unter normalen Bedingungen das erste und das zweite Scharnierblatt (22, 24) relativ zueinander verschwenkt werden können, und zwar um eine einzige Schwenkachse (18), welche die beiden Teile des Befestigungsmechanismus (25, 26) miteinander verbindet, wobei ein erstes Teil des Befestigungsmechanismus (25, 26) über eine normalerweise feste, jedoch lösbare Verbindung (40, 42) mit einem der beiden ersten und zweiten Scharnierblätter (22, 24) verbunden ist, wobei die erste lösbare Verbindung (40, 42) dann gelöst wird, wenn eine ausreichende Kraft daran angelegt wird, so daß sich das erste und das zweite Scharnierblatt (22, 24) auseinander und wieder zusammenbewegen können, indem sie um mehr als eine Schwenkachse (18, 28, 38) verschwenkt werden,
**dadurch gekennzeichnet, daß** ein zweites Teil des Befestigungsmechanismus (25, 26) mit dem anderen der beiden ersten und zweiten Scharnierblätter (22) über eine zweite normalerweise feste, aber lösbare Verbindung (44, 48) verbunden ist, und daß sich das zweite Teil (26) des Befestigungsmechanismus (25, 26) zusammen mit dem anderen der beiden ersten und zweiten Scharnierblätter (22, 24) bewegt.

2. Scharniermechanismus nach Anspruch 1, worin besagtes erstes Teil des zweiteiligen Befestigungsmechanismus ein viertes Scharnierblatt (25) ist, und das zweite Teil der beiden Teile des Befestigungsmechanismus ein drittes Scharnierblatt (26) ist, wobei das dritte Scharnierblatt (26) an entsprechenden, im Abstand von einander liegenden Drehpunkten (18, 28) schwenkbar jeweils am ersten Scharnierblatt (22) und am vierten Scharnierblatt (25) angelenkt ist, und wobei das vierte Scharnierblatt (25) schwenkbar an entsprechenden, im Abstand von einander liegenden Drehpunkten (18, 38) jeweils am dritten Scharnierblatt (26) und am zweiten Scharnierblatt (24) angelenkt ist, wobei das dritte Scharnierblatt (26) über die zweite lösbare Verbindung (44, 48) am ersten Scharnierblatt (22) befestigt ist, und wobei das vierte Scharnierblatt (25) über die erste lösbare Verbindung (40, 42) am zweiten Scharnierblatt (24) befestigt ist, wobei die erste und die zweite lösbare Verbindung (40, 42; 44, 48) so ausgelegt ist, daß unter normalen Betriebsbedingungen die erste lösbare Verbindung (40, 42) eine Relativdrehung zwischen dem vierten Arm (25) und dem zweiten Arm (24) verhindert, und worin die zweite lösbare Verbindung (44, 48) eine Relativdrehung zwischen dem dritten Arm (26) und dem ersten Arm (22) verhindert, so daß zwischen dem dritten und dem vierten Scharnierblatt (26, 25) nur eine einzige Drehachse (18) hergestellt wird.

3. Scharniermechanismus nach Anspruch 1 oder 2, worin die bzw. jede lösbare Verbindung zwischen den beiden Scharnierblättern durch die Zusammenwirkung eines Vorsprunges (42, 44) an der Oberfläche des einen Scharnierblattes und einer entsprechenden Aussparung in einer gegenüberliegenden Oberfläche des anderen Scharnierblattes gebildet wird.

4. Scharniermechanismus nach Anspruch 3, worin jeder Vorsprung in Form einer Rippe (42, 44) ausgestaltet ist, und jede Aussparung in Form einer Nut (40, 48) ausgestaltet ist, worin jede Rippe (42, 44) und jede Nut (40, 48) längs einem entsprechenden Scharnierblatt verläuft, in dem sie eingeformt ist, und zwar über wenigstens einen Teil seiner Länge in radialer Richtung in bezug auf eine Schwenkbewegungsachse zwischen dem entsprechenden Scharnierblatt und einem angrenzenden Scharnierblatt.

5. Scharniermechanismus nach Anspruch 4, worin die Nuten (40, 48) und die Rippen (42, 44) in einer Richtung abgerundet sind, die quer zu derjenigen Richtung verläuft, in welcher sie sich erstrecken.

6. Scharniermechanismus nach Anspruch 4 oder 5, worin sich die Nuten (40, 48) und die Rippen (42, 44) entlang eines wesentlichen Teiles der Länge der Scharnierblätter erstrecken.

7. Scharniermechanismus nach einem beliebigen der Ansprüche 3 bis 6, worin die Scharnierblätter (22, 24, 25, 26) in der Lage sind, sich zu verformen und wieder in ihre Ausgangsform zurückzukehren, so daß sich der Vorsprung (42, 44) und die Aussparung (40, 48) von einander trennen können.

8. Scharniermechanismus nach einem beliebigen der Ansprüche 2 bis 7, worin die maximale Trennung und relative seitliche Auslenkung in einer Richtung des ersten und des zweiten Scharnierblattes (22, 24) beim Auseinanderspreizen derselben durch einen Maximalwinkel begrenzt ist, um den sich das dritte Scharnierblatt (26) dem vierten Scharnierblatt (25) gegenüber verdrehen kann.

9. Scharniermechanismus nach Anspruch 8, worin der Maximalwinkel, um welchen sich das dritte Scharnierblatt (26) dem vierten Scharnierblatt (25) gegenüber verdrehen kann, von einem Zapfen (50) begrenzt wird, der vom dritten Scharnierblatt (26) in der Nähe der Schwenkachse (18) zwischen dem dritten und dem vierten Scharnierblatt (26, 25) absteht, wobei der Zapfen (50) ausgelegt ist, an einem Anschlag (52) am vierten Scharnierblatt (25) zur Anlage zu kommen, wenn das dritte Scharnierblatt (26) eine vorgegebene Winkelstellung erreicht hat, so daß jede weitere Bewegung des dritten Scharnierblattes (26) vermieden wird.

10. Scharniermechanismus nach einem beliebigen der vorangehenden Ansprüche, worin die lösbaren Verbindungen wieder einrastbar sind, so daß das erste und das zweite Scharnierblatt (22, 24) anschließend wieder in seiner jeweiliger Normalstellung fixiert werden kann, nachdem die beiden Blätter gelöst worden sind.

## Revendications

1. Mécanisme de charnière destiné à réaliser une liaison articulée entre deux composants, le mécanisme de charnière (14) comprenant une première lame de charnière (22) devant être attachée de manière fixe à un premier composant (12), une seconde lame de charnière (24) devant être attachée de manière fixe à un second composant (13) et un mécanisme de liaison en deux parties (25, 26) entre les première et seconde lames de charnière (22, 24) agencés de sorte que, dans des conditions normales, les première et seconde lames (22, 24) peuvent pivoter l'une par rapport à l'autre autour d'un seul axe de pivotement (18) reliant les deux parties du mécanisme de liaison (25, 26), dans lequel une première partie du mécanisme de liaison (25, 26) est reliée à l'une des première et seconde lames de charnière (22, 24) par une première liaison normalement fixée mais libérable (40, 42), la première liaison libérable (40, 42) étant libérée lorsqu'une force suffisante lui est appliquée de façon à permettre aux première et seconde lames (22, 24) de s'écarter l'une de l'autre et de se rapprocher l'une de l'autre en pivotant autour de plus d'un axe de pivotement (18, 28, 38), **caractérisé en ce qu'**une seconde partie du mécanisme de liaison (25, 26) est reliée à l'autre des première et seconde lames de charnière (22) par une seconde liaison normalement fixée mais libérable (44, 48) et **en ce que** la seconde partie (26) du mécanisme de liaison (25, 26) se déplace avec l'autre des première et seconde lames de charnière (22, 24).

2. Mécanisme de charnière selon la revendication 1, dans lequel ladite première partie des deux parties du mécanisme de liaison est une quatrième lame (25) et la seconde partie des deux parties de la liaison est une troisième lame (26), la troisième lame (26) étant fixée avec possibilité de pivotement au niveau de points de pivotement respectifs espacés (18, 28) à la première lame (22) et à la quatrième lame (25), et la quatrième lame (25) étant fixée avec possibilité de pivotement au niveau de points de pivotement respectifs espacés (18, 38) à la troisième lame (26) et à la seconde lame (24), dans lequel la troisième lame (26) est fixée à la première lame (22) par la seconde liaison libérable (44, 48) et la quatrième lame (25) est fixée à la seconde lame (24) par la première liaison libérable (40, 42), les première et seconde liaisons libérables (40, 42 ; 44, 48) étant telles que dans des conditions de fonctionnement normales, la première liaison libérable (40, 42) empêche une rotation relative du quatrième bras (25) par rapport au second bras (24) et la seconde liaison libérable (44, 48) empêche une rotation relative du troisième bras (26) par rapport au premier bras (22), de sorte qu'un seul axe de pivotement (18) est prévu entre les troisième et quatrième lames (26, 25).

3. Mécanisme de charnière selon la revendication 1 ou la revendication 2, dans lequel la ou chaque liaison libérable entre deux lames est formée grâce à la coopération d'une saillie (42, 44) à la surface d'une première lame avec un évidement correspondant (40, 48) sur une surface opposée de l'autre lame.

4. Mécanisme de charnière selon la revendication 3, dans lequel chaque saillie est sous la forme d'une nervure (42, 44) et chaque évidement est sous la forme d'une rainure (40, 48), dans lequel chaque nervure (42, 44) et chaque rainure (40, 48) s'étend le long de la lame respective dans laquelle elle est formée pendant au moins une partie de sa longueur dans une direction radiale par rapport à un axe de mouvement pivotant entre la lame respective et une lame contiguë.

5. Mécanisme de charnière selon la revendication 4, dans lequel les rainures (40, 48) et les nervures (42, 44) sont arrondies dans une direction transversale à la direction suivant laquelle elles s'étendent.

6. Mécanisme de charnière selon les revendications 4 ou 5, dans lequel les rainures (40, 48) et les nervures (42, 44) s'étendent le long d'une partie substantielle de la longueur des lames.

7. Mécanisme de charnière selon l'une quelconque des revendications 3 à 6, dans lequel les lames (22, 24, 25, 26) peuvent se déformer de façon réversible de manière à permettre à la saillie (42, 44) et à l'évidement (40, 48) de se séparer.

8. Mécanisme de charnière selon l'une quelconque des revendications 2 à 7, dans lequel la séparation et le déplacement latéral relatif maximums dans une direction des première et seconde lames (22, 24) lorsqu'elles se séparent est limité par un angle maximum suivant lequel la troisième lame (26) peut pivoter par rapport à la quatrième lame (25).

9. Mécanisme de charnière selon la revendication 8, dans lequel l'angle maximum suivant lequel la troisième lame (26) peut pivoter par rapport à la quatrième lame (25) est limité par un appendice (50) s'étendant depuis la troisième lame (26) près de l'axe de pivotement (18) entre les troisième et quatrième lames (26, 25), l'appendice (50) étant conçu pour venir en contact avec une butée d'arrêt (52) sur la quatrième lame (25) lorsque la troisième lame (26) atteint une position angulaire préétablie, de façon à empêcher tout mouvement supplémentaire de la troisième lame (26).

10. Mécanisme de charnière selon l'une quelconque des revendications précédentes, dans lequel les liaisons libérables peuvent être ré-accouplées de façon à permettre aux première et seconde lames (22, 24) d'être ensuite refixées à leurs positions normales après avoir été libérées.
